# EUROPEAN PATENT APPLICATION

(11) **EP 4 050 582 A2**
(43) Date of publication of application: **31.08.2022**
(21) Application number: 22180390.1
(22) Date of filing: 22.06.2022
(51) Int. Cl.: G08G 1/005, G08G 1/16, G01S 13/931, G06V 20/58, B60Q 1/50

(54) **METHOD AND APPARATUS OF WARNING PEDESTRIAN OR VEHICLE TO MAKE AVOIDANCE BY AUTONOMOUS VEHICLE, AND AUTONOMOUS VEHICLE**

(30) Priority: 22.06.2021 CN 202110695652
(71) Applicant: Apollo Intelligent Connectivity (Beijing) Technology Co., Ltd., Beijing 100176 (CN)
(72) Inventor: Luo, Xiang, Beijing, 100176 (CN)
(74) Representative: Hoffmann Eitle

(57) **Abstract**

The present disclosure provides a method of warning a pedestrian or a vehicle to make avoidance by an autonomous vehicle, which relates to a field of artificial intelligence, in particular to fields of deep learning, cloud computing, NLP and the like, and is applicable to an automatic driving scenario. The method may include: acquiring a prompt for warning a pedestrian or a vehicle to make avoidance; and displaying the prompt on a display unit of the autonomous vehicle, where the display unit includes at least one of a windshield, a window glass, a projection screen mounted on the windshield, and a projection screen mounted on the window glass.

## Description

### TECHNICAL FIELD

The present disclosure relates to a field of artificial intelligence, in particular to fields of deep learning, cloud computing, NLP (Natural Language Processing), etc., and is applicable in an automatic driving scenario. Specifically, the present disclosure relates to a method and an apparatus of warning a pedestrian or a vehicle to make avoidance by an autonomous vehicle, an autonomous vehicle, a server, a warning system for an autonomous vehicle, an electronic device, a storage media, and a computer program product.

### BACKGROUND

With the rapid development of unmanned vehicles (also referred to as autonomous vehicles), the number of autonomous vehicles driving in the streets have been increased.

### SUMMARY

The present disclosure provides a method and an apparatus of warning a pedestrian or a vehicle to make avoidance by an autonomous vehicle, an autonomous vehicle, a server, a warning system for an autonomous vehicle, an electronic device, a storage media, and a computer program product.

According to an aspect of the present disclosure, a method of warning a pedestrian or a vehicle to make avoidance by an autonomous vehicle is provided, including: acquiring a prompt for warning a pedestrian or a vehicle to make avoidance; and displaying the prompt on a display unit of the autonomous vehicle, where the display unit comprises at least one of a windshield, a window glass, a projection screen mounted on the windshield, and a projection screen mounted on the window glass.

According to another aspect of the present disclosure, an apparatus of warning a pedestrian or a vehicle to make avoidance by an autonomous vehicle is provided, including: a first acquisition module configured to acquire a prompt for warning a pedestrian or a vehicle to make avoidance; and a display module configured to display the prompt on a display unit of the autonomous vehicle, where the display unit includes at least one of a windshield, a window glass, a projection screen mounted on the windshield, and a projection screen mounted on the window glass.

According to yet another aspect of the present disclosure, a server is provided, including a sending module configured to send a prompt for warning a pedestrian or a vehicle to make avoidance to an autonomous vehicle, such that the autonomous vehicle acquires the prompt and displays the prompt on a display unit of the autonomous vehicle, where the display unit includes at least one of a windshield, a window glass, a projection screen mounted on the windshield, and a projection screen mounted on the window glass.

According to yet another aspect of the present disclosure, an electronic device is provided, including at least one processor, and a memory communicatively connected to the at least one processor, where the memory stores instructions executable by the at least one processor, and the instructions, when executed by the at least one processor, cause the at least one processor to implement the method according to the embodiment of the present disclosure.

According to yet another aspect of the present disclosure, an autonomous vehicle is provided, including the electronic device according to the embodiment of the present disclosure.

According to yet another aspect of the present disclosure, a warning system for an autonomous vehicle is provided, including the autonomous vehicle according to the embodiment of the present disclosure, and the server according to the embodiment of the present disclosure.

According to yet another aspect of the present disclosure, a non-transitory computer-readable storage medium having computer instructions stored thereon is provided, where the computer instructions allow a computer to implement the method according to the embodiment of the present disclosure.

According to yet another aspect of the present disclosure, a computer program product is provided, including a computer program, which when executed by a processor, implements the method according to the embodiment of the present disclosure.

It should be understood that content described in this section is not intended to recognize key or important features in the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and do not constitute a limitation to the present disclosure.
FIG. 1 exemplarily shows a system architecture in which an embodiment of the present disclosure may be applied;
FIG. 2 exemplarily shows a method of warning a pedestrian or a vehicle to make avoidance by an autonomous vehicle according to an embodiment of the present disclosure;
FIG. 3 exemplarily shows a principle diagram of warning a pedestrian or a vehicle to make avoidance by an autonomous vehicle according to an embodiment of the present disclosure;
FIG. 4 shows a block diagram of an apparatus of warning a pedestrian or a vehicle to make avoidance by an autonomous vehicle according to an embodiment of the present disclosure;
FIG. 5 exemplarily shows a block diagram of an autonomous vehicle according to an embodiment of the present disclosure;
FIG. 6 exemplarily shows a block diagram of a server according to an embodiment of the present disclosure;
FIG. 7 exemplarily shows a block diagram of a warning system for an autonomous vehicle according to an embodiment of the present disclosure; and
FIG. 8 exemplarily shows a block diagram of an electronic device used to implement an embodiment of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

At present, an autonomous vehicle equipped with various sensors may recognize surrounding pedestrian(s) or vehicle(s) through high-precision recognition algorithms, in order to avoid collision with the surrounding pedestrian(s) or vehicle(s). However, the autonomous vehicle is unable to communicate with the surrounding pedestrian(s) or vehicle, so that the driving intention of the autonomous vehicle usually fails to be understood accurately and effectively by the surrounding pedestrian(s) or vehicle(s), leading to a potential road safety risk.

For example, when vehicles traveling in opposite directions meet on a narrow road, in a case where there are drivers in the vehicles, the drivers may let each other know their driving intentions by means of light flashing, horn blaring, language, gestures, facial expressions, etc., so that the vehicles may finally pass through the road section safely.

In a case where an autonomous vehicle gives way to a pedestrian, reverses, or malfunctions, the efficiency of safe passage on the road may be greatly improved if a current driving intention of the autonomous vehicle is understood by a vehicle or a pedestrian around the autonomous vehicle intuitively and effectively.

In view of this this, the related art provides two schemes for an autonomous vehicle to express its own driving intention.

In scheme 1, a vehicle or a pedestrian in front of the autonomous vehicle is warned by using an on-board signal light of the autonomous vehicle.

In scheme 2, the vehicle or the pedestrian around the autonomous vehicle is warned by using a voice broadcast system installed outside the autonomous vehicle.

It should be understood that there is no unified standard for the use of signal light in scheme 1 currently. Different vehicles provide warnings in different ways, and even different brands or types of vehicles use the same signal light color to expresses completely different meanings, causing it difficult for the pedestrian or the vehicle around the autonomous vehicle to understand the driving intention of the autonomous vehicle. In addition, in scheme 1, the on-board signal light usually conveys warning information by changing the color of light, the frequency of flashing, etc. Accordingly, conveying information in this manner provide too small amount of information to cover various complex road scenarios.

It should also be understood that for scheme 2, if the voice is too low during the broadcast, it is difficult to convey the warning information that needs to be conveyed to other vehicle(s) or pedestrian(s) in a noisy environment; and if the voice is too loud during the broadcast, it may startle the pedestrian(s). In addition, for a driver in a vehicle with particularly well-closed windows, a pedestrian wearing a headphone, or a pedestrian with hearing impairment, this voice broadcast system may not work at all.

In view of this, an embodiment of the present disclosure provides a solution of warning a pedestrian or a vehicle to make avoidance by an autonomous vehicle, which may display a driving intention of the autonomous vehicle, so that the probability of a traffic accident on the road caused by misjudging the driving intention of the autonomous vehicle may be reduced, and the efficiency of safe passage on the road may be improved in some extent.

The present disclosure will be described in detail below with reference to the accompanying drawings and specific embodiments.

A system architecture for a method and an apparatus of warning a pedestrian or a vehicle to make avoidance by an autonomous vehicle according to an embodiment of the present disclosure is introduced as follows.

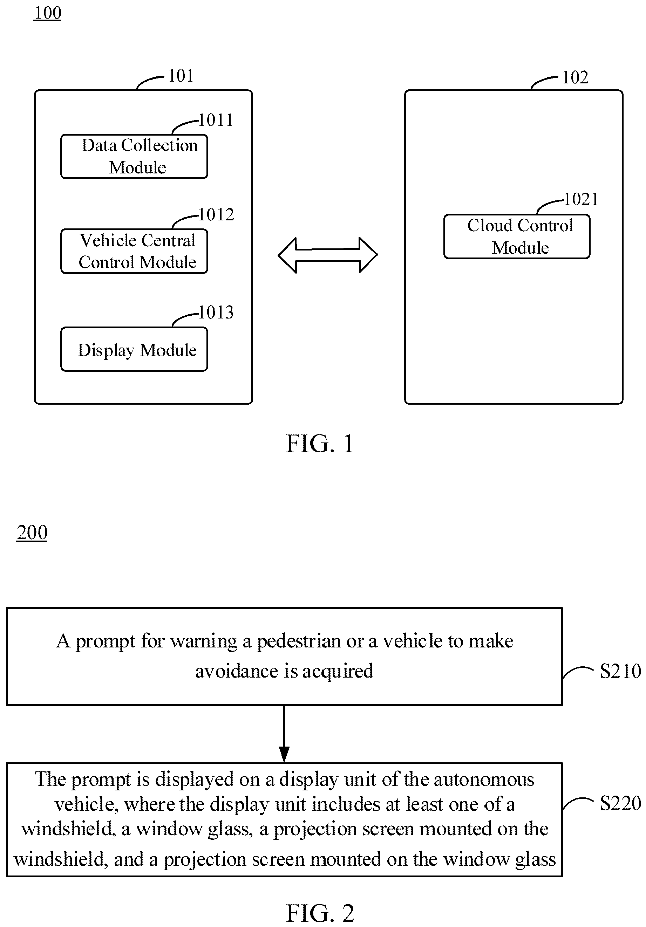

FIG. 1 exemplarily shows a system architecture in which an embodiment of the present disclosure may be applied. It should be noted that FIG. 1 is only an example of a system architecture to which the embodiment of the present disclosure may be applied, so as to help those skilled in the art understand the technical content of the present disclosure, but does not mean that the embodiment of the present disclosure is not applicable in other environment or scenario.

As shown in FIG. 1, the system architecture 100 may include an autonomous vehicle 101 and a server 102.

The autonomous vehicle 101 may include a data collection module 1011, a vehicle central control module 1012, and a display module 1013. The server 102 may include a cloud control module 1021.

The data collection module 1011 may include an image collection device (e.g., a camera) and a radar. The image collection device may collect image data for the environment around the autonomous vehicle. The radar may collect radar data for the environment around the autonomous vehicle. The data collection module 1011 may send the collected image data and the collected radar data to the vehicle central control module 1012.

The vehicle central control module 1012 may recognize the image data and the radar data which are collected by the data collection module 1011, determine a corresponding driving scenario matched with the recognition result, determine a corresponding prompt, that expresses a current driving intention of the autonomous vehicle, associated with the matched driving scenario, and send the prompt to the display module 1013 to display the prompt, so as to achieve the purpose of expressing the current driving intention of the autonomous vehicle to warn the pedestrian(s) or vehicle(s) around the autonomous vehicle to make avoidance.

In addition, the vehicle central control module 1012 may further send the image data and the radar data which are collected by the data collection module 1011 as well as other data to the cloud control module 1021. The other data includes information such as the recognition result acquired by the vehicle central control module 1012, the driving scenario matched with the recognition result, and the prompt associated with the driving scenario.

In addition, when the autonomous vehicle malfunctions, the vehicle central control module 1012 may further send an alarm message to the cloud control module 1021.

The display module 1013 may display the prompt to warn the pedestrian(s) or vehicle(s) around the autonomous vehicle to make avoidance.

When the autonomous vehicle 101 malfunctions or in other special cases, the server 102 may send a corresponding prompt to the autonomous vehicle 101 according to the information uploaded by the autonomous vehicle 101, so as to warn the pedestrian(s) or vehicle(s) around the autonomous vehicle to make avoidance.

It should be understood that the number of the autonomous vehicle(s) and the number of the server(s) in FIG. 1 are only illustrative, and the number of autonomous vehicle(s) and the number of server(s) may be set as desired in practice.

An application scenario in which the method and apparatus of warning a pedestrian or a vehicle to make avoidance by an autonomous vehicle according to the embodiments of the present disclosure may be applied are described as follows.

It should be understood that the solution of warning a pedestrian or a vehicle to make avoidance by an autonomous vehicle provided in the embodiments of the present disclosure may be applied to automatic driving, intelligent traffic and other scenarios.

According to an embodiment of the present disclosure, a method of warning a pedestrian or a vehicle to make avoidance by an autonomous vehicle is provided in the present disclosure.

FIG. 2 exemplarily shows a flowchart of a method of warning a pedestrian or a vehicle to make avoidance by an autonomous vehicle according to an embodiment of the present disclosure.

As shown in FIG. 2, the method 200 of warning a pedestrian or a vehicle to make avoidance by an autonomous vehicle may include operations S210 to S220.

In operation S210, a prompt for warning a pedestrian or a vehicle to make avoidance is acquired.

In operation S220, the prompt is displayed on a display unit of the autonomous vehicle, where the display unit includes at least one of a windshield, a window glass, a projection screen mounted on the windshield, and a projection screen mounted on the window glass.

In some embodiments of the present disclosure, in operation S210, a prompt which is acquired by the autonomous vehicle based on the image data and the radar data collected by the autonomous vehicle and expresses a current driving intention of the autonomous vehicle, may be acquired.

Alternatively, in some other embodiments of the present disclosure, in operation S210, a prompt which is sent by the cloud control module and expresses a current driving intention of the autonomous vehicle, may be acquired.

Alternatively, in some other embodiments of the present disclosure, in operation S210, a prompt expressing a current driving intention of the autonomous vehicle, which is acquired by the autonomous vehicle based on the image data and the radar data collected by the autonomous vehicle, may be acquired under a normal circumstance; and a prompt expressing the current driving intention of the autonomous vehicle, which is sent by the cloud control module, may be acquired under an abnormal circumstance, such as a circumstance where the autonomous vehicle malfunctions or the autonomous vehicle fails to obtain an appropriate prompt based on the image data and the radar data collected by itself.

In an embodiment of the present disclosure, the autonomous vehicle may display the prompt on at least one of a front windshield, a rear windshield, a left window glass, a right window glass, a projection screen mounted on the front windshield, a projection screen mounted on the rear windshield, a projection screen mounted on the left window glass, and a projection screen mounted on the right window glass, so as to express its driving intention and warn the pedestrian(s) or the vehicle(s) around the autonomous vehicle to make avoidance.

According to the embodiment of the present disclosure, the driving intention of the autonomous vehicle is expressed by displaying the graphic and text prompt information, such that it is convenient for the pedestrian(s) or vehicle(s) around the autonomous vehicle to understand the current driving intention of the autonomous vehicle and the interference from the surrounding environment is reduced, thereby achieving the effective and accurate conveying of the driving intention of the autonomous vehicle.

In addition, according to the embodiment of the present disclosure, functions and experiences in the field of autonomous driving may be further improved, and the people's misgivings about the driving safety of an autonomous vehicle may be reduced.

In some embodiments, the windshield may include at least one of a front windshield and a rear windshield.

Since there is no driver in the autonomous vehicle, there is no driving safety problem caused by vision blocking of a driver in the autonomous vehicle. As such, in the embodiment of the present disclosure, the driving intention of the autonomous vehicle may be expressed through the front windshield alone, the driving intention of the autonomous vehicle may be expressed through the rear windshield alone, or the driving intention of the autonomous vehicle may be expressed through both the front windshield and the rear windshield.

In the embodiment of the present disclosure, the prompt that expresses the driving intention of the autonomous vehicle is displayed on at least one of the front windshield and the rear windshield, without the problem of vision blocking of a driver. Therefore, driving of the vehicle would not be affected, while the structure of the autonomous vehicle does not have to be changed. In addition, it is also possible for the vehicle(s) or pedestrian(s) around the autonomous vehicle to accurately and effectively understand the driving intention of the autonomous vehicle.

In addition, in an embodiment of the present disclosure, the display unit may include at least one of an information projection screen mounted on the front windshield of the autonomous vehicle, an information projection screen mounted on the rear windshield of the autonomous vehicle, an information projection screen mounted on the left window glass of the autonomous vehicle, or an information projection screen mounted on the right window glass of the autonomous vehicle. The display unit may receive the display data sent from the vehicle central control module, and project the graphic and text information to be displayed on the at least one of the information projection screen on the front windshield, the information projection screen on the rear windshield, the information projection screen on the left window glass, or the information projection screen on the right window glass .

It should be understood that such display unit does not need a change of the structure of the autonomous vehicle, and does not affect the vision of the autonomous vehicle.

In some embodiment, displaying the prompt on the display unit of the autonomous vehicle may include performing at least one of the following operations based on the driving intention of the autonomous vehicle expressed by the prompt: displaying the prompt at a specified position of the display unit of the autonomous vehicle; displaying the prompt with a specified text attribute on the display unit of the autonomous vehicle; and displaying the prompt by the autonomous vehicle on the display unit within a specified time period.

In an embodiment of the present disclosure, the display time, the display position, and the display style of the prompt on the display unit may be flexibly controlled according to the driving intention of the autonomous vehicle expressed by the prompt.

For example, if the prompt includes information for warning a vehicle or a pedestrian behind the autonomous vehicle to pay attention to the autonomous vehicle, the prompt may be displayed on the rear windshield of the autonomous vehicle. Similarly, if the prompt includes information for warning a vehicle or a pedestrian in front of the autonomous vehicle to pay attention to the autonomous vehicle, the prompt may be displayed on the front windshield of the autonomous vehicle.

For example, for a particularly dangerous driving scenario, the prompt may be displayed in red, indicating that the safety level is high and the pedestrian(s) or vehicle(s) around the autonomous vehicle need to pay special attention.

In some embodiment, acquiring a prompt for warning a pedestrian or a vehicle to make avoidance includes the following operations.

Data currently collected by the autonomous vehicle is acquired, where the data currently collected by the autonomous vehicle includes at least one of image data and radar data.

The data currently collected by the autonomous vehicle is recognized to obtain a corresponding recognition result.

A driving scenario matched with the recognition result is determined for the autonomous vehicle.

A prompt associated with the driving scenario for the autonomous vehicle is acquired so as to warn a pedestrian around the autonomous vehicle or a vehicle around the autonomous vehicle to make avoidance.

It should be understood that the image data and the radar data may reflect the condition of the environment around the autonomous vehicle and the driving intention of the autonomous vehicle.

In an embodiment of the present disclosure, it is possible to preset various driving scenarios and various prompts, and a mapping relationship between each driving scenario and each prompt. Therefore, during a driving process of the autonomous vehicle, a driving scenario and a corresponding prompt matched with the driving scenario may be determined sequentially according to the recognition result for the image data and the radar data, and the prompt may be displayed on the display unit to warn the pedestrian(s) or vehicle(s) around the autonomous vehicle to make avoidance.

For example, in an embodiment of the present disclosure, the autonomous vehicle may include the data collection module. The data collection module may include, for example, an on-board infrared camera with a 360-degree view and an on-board radar sensor. After the data collection module collects the data, the image data and the radar data may be sent to the vehicle central control module of the autonomous vehicle by the data collection module in real time. Then, the vehicle central control module recognizes the image data and the radar data to obtain the corresponding recognition result. Then, a corresponding driving scenario matched with the recognition result is determined, a corresponding prompt associated with the driving scenario is determined, and the prompt is sent to the display unit to be displayed.

According to the embodiment of the present disclosure, the autonomous vehicle may recognize the prompt matched with the current driving scenario automatically, so as to warn the pedestrian(s) or vehicle(s) around the autonomous vehicle to make avoidance.

Further, in some embodiment, the method may further include: in a case that no driving scenario matched with the recognition result is determined for the autonomous vehicle, a prompt sent by a server for the recognition result and/or the data currently collected by the autonomous vehicle is acquired, so as to warn the pedestrian(s) or vehicle(s) around the autonomous vehicle to make avoidance.

In some embodiments of the present disclosure, in some special cases, such as in a case that the autonomous vehicle fails to determine a matched current driving scenario for the autonomous vehicle, the prompt sent by the server for the recognition result and/or the data currently collected by the autonomous vehicle may be acquired and displayed, so as to warn the pedestrian(s) or vehicle(s) around the autonomous vehicle to make avoidance.

Alternatively, in some other embodiments of the present disclosure, in a case that the autonomous vehicle malfunctions, the prompt sent by the server for the recognition result and/or the data currently collected by the autonomous vehicle may be acquired and displayed, so as to warn the pedestrian(s) or vehicle(s) around the autonomous vehicle to make avoidance.

Alternatively, in other embodiments of the present disclosure, in some special cases, such as in a case that the autonomous vehicle fails to determine a matched current driving scenario for the autonomous vehicle, a default prompt may be displayed, so as to warn the pedestrian(s) or vehicle(s) around the autonomous vehicle to make avoidance.

In addition, in the embodiment of the present disclosure, in a case that the autonomous vehicle malfunctions or fails to determine a matched current driving scenario for the autonomous vehicle, the autonomous vehicle may send an alarm message to the cloud control module, so as to remind the cloud to send a corresponding prompt.

According to the embodiment of the present disclosure, cloud intervention may be introduced in a special case or in a case that the autonomous vehicle malfunctions. The cloud may send the prompt matched with the current driving scenario for the autonomous vehicle, so that the autonomous vehicle may accurately and effectively express its driving intention in the special case, improving the road access rate and ensure the traffic safety.

In some embodiment, acquiring of a prompt for warning a pedestrian or a vehicle to make avoidance may include the following operations.

The data currently collected by the autonomous vehicle is acquired, where the data currently collected by the autonomous vehicle includes at least one of the image data and the radar data.

The data currently collected by the autonomous vehicle is uploaded to the server.

The prompt sent by the server for the data currently collected by the autonomous vehicle is acquired, so as to warn the pedestrian(s) or vehicle(s) around the autonomous vehicle to make avoidance.

It should be noted that, in an embodiment of the present disclosure, a corresponding prompt may be acquired at the autonomous vehicle terminal according to the data collected by the autonomous vehicle, or a corresponding prompt may be acquired from the cloud according to the data collected by the autonomous vehicle. The manner in which the cloud acquires the corresponding prompt according to the data collected by the autonomous vehicle is similar to the manner in which the autonomous vehicle terminal acquires the corresponding prompt according to the data collected by the autonomous vehicle, and details will not be repeated here again.

According the embodiments of the present disclosure, in addition to a special case, it is possible to introduce cloud intervention in a normal circumstance, in which the cloud may send the prompt matched with a current driving scenario for the autonomous vehicle, so as to achieve the expressing of the driving intention of the autonomous vehicle in various manners.

**In** some embodiment, the method may further include transmitting data of the autonomous vehicle to a server (such as a cloud server, also referred as cloud). The data of the autonomous vehicle includes at least one of the data currently collected by the autonomous vehicle, the recognition result, information of the driving scenario for the autonomous vehicle matching the recognition result, and a prompt associated with the information of the driving scenario for the autonomous vehicle.

In an embodiment of the present disclosure, the autonomous vehicle may acquire the above-mentioned data uploaded by the autonomous vehicle in real time, and learn more driving scenarios and more driving intentions based on the acquired data, so as to provide data for supporting the subsequent update and upgrade of the autonomous vehicle system.

In addition, in an embodiment of the present disclosure, by using the cloud control module, an autonomous vehicle administrator may view the content captured by a camera of the autonomous vehicle and read the driving intention given by the vehicle in real time. When the vehicle malfunctions or fails to determine any matched driving scenario which is preset and stored locally, it is possible for the autonomous vehicle administrator to see the warning message and choose to intervene manually, so as to send to the vehicle central control module of the vehicle a graphic information to be displayed through the network. The data is parsed by the vehicle central control module, and then the data is sent to the display unit. Finally the corresponding graphic and text information is displayed, so as to warn the pedestrian(s) and other vehicle(s) around the vehicle to make avoidance.

According to the embodiment of the present disclosure, the cloud may learn more driving scenarios and corresponding prompts according to the data uploaded by the autonomous vehicle, so as to upgrade the system of the autonomous vehicle or update the data of the autonomous vehicle, thereby continuously update and improve functions and experiences of the autonomous vehicle.

In some embodiment, the method may further include the following operations.

Updated data sent by the server is acquired.

By using the updated data, at least one of the following information is updated: information of the driving scenario for the autonomous vehicle stored locally by the autonomous vehicle, a prompt associated with the information of the driving scenario for the autonomous vehicle stored locally by the autonomous vehicle, and a relationship between the information of the driving scenario for the autonomous vehicle stored locally by the autonomous vehicle and the prompt associated with the information of the driving scenario for the autonomous vehicle stored locally by the autonomous vehicle.

According to the embodiment of the present disclosure, the system of the autonomous vehicle may be upgraded, or the data of the autonomous vehicle may be updated, so that it is possible to continuously update and improve the functions and experiences of the autonomous vehicle.

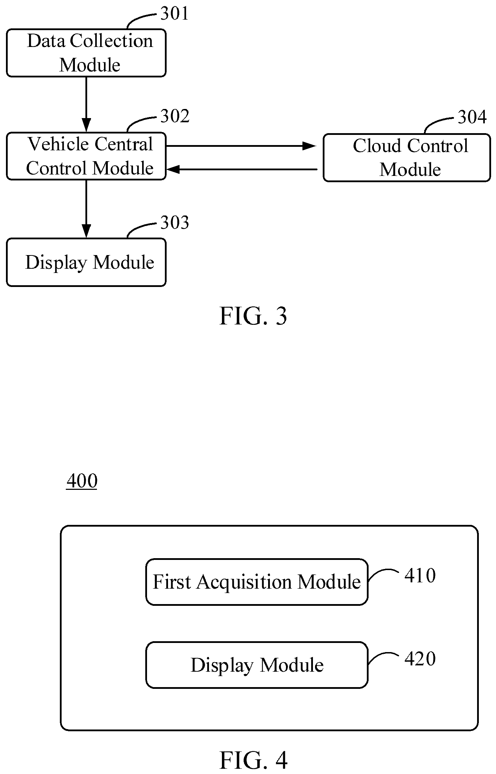

The principle of the implementation of the embodiments of the present disclosure will be described in detail below with reference to FIG. 3.

As shown in FIG. 3, the autonomous vehicle may collect the image data and the radar data for the surrounding environment by using the data collection module 301, and send the collected image data and the collected radar data to the vehicle central control module 302 of the autonomous vehicle in real time.

By using the vehicle central control module 302, the autonomous vehicle may recognize the image data and the radar data which are collected by the data collection module 301, determine the corresponding driving scenario matched with the recognition result, determine the corresponding prompt, which is associated with the matched driving scenario and expresses the current driving intention of the autonomous vehicle, and finally send the prompt to the display module 303 in real time to display the prompt, so as to achieve the expressing of the current driving intention of the autonomous vehicle to warn the pedestrian(s) or vehicle(s) around the autonomous vehicle to make avoidance.

In addition, the vehicle central control module 302 may send the image data and the radar data which are collected by the data collection module 301 and other data to the cloud control module 304.

In addition, in a case that the autonomous vehicle malfunctions, the vehicle central control module 302 may send the alarm message to the cloud control module 304.

The display module 303 may display the prompt to warn the pedestrian(s) or vehicle(s) around the autonomous vehicle to make avoidance.

The cloud control module 304 may send the corresponding prompt to the vehicle central control module 302 of the autonomous vehicle according to the information uploaded by the autonomous vehicle when the autonomous vehicle malfunctions or in other special cases, so as to warn the pedestrian(s) or vehicle(s) around the autonomous vehicle to make avoidance.

According to an embodiment of the present disclosure, an apparatus of warning a pedestrian or a vehicle to make avoidance by an autonomous vehicle is further provided in the present disclosure.

FIG. 4 shows a block diagram of an apparatus of warning a pedestrian or a vehicle to make avoidance by an autonomous vehicle according to an embodiment of the present disclosure.

As shown in FIG. 4, the apparatus 400 of warning a pedestrian or a vehicle to make avoidance by an autonomous vehicle may include a first acquisition module 410 and a display module 420.

The first acquisition module 410 is configured to acquire a prompt for warning a pedestrian or a vehicle to make avoidance.

The display module 420 is configured to display the prompt on a display unit of the autonomous vehicle, where the display unit includes at least one of a windshield, a window glass, a projection screen mounted on the windshield, and a projection screen mounted on the window glass.

In some embodiment, the windshield includes at least one of a front windshield and a rear windshield.

In some embodiment, the display module is further configured to perform at least one of the following operations based on the driving intention of the autonomous vehicle expressed by the prompt: displaying the prompt at a specified position of the display unit of the autonomous vehicle; displaying the prompt with a specified text attribute on the display unit of the autonomous vehicle; and causing the autonomous vehicle to display the prompt on the display unit within a specified period of time.

In some embodiment, the first acquisition module includes: a first acquisition unit configured to acquire data currently collected by the autonomous vehicle, where the data currently collected by the autonomous vehicle includes at least one of image data and radar data; an recognition unit configured to recognize the data currently collected by the autonomous vehicle to obtain a corresponding recognition result; a determination unit configured to determine for the autonomous vehicle a driving scenario matched with the recognition result; and a second acquisition unit configured to acquire a prompt associated with the driving scenario for the autonomous vehicle to warn a pedestrian around the autonomous vehicle or a vehicle around the autonomous vehicle to make avoidance.

In some embodiment, the apparatus further includes: a second acquisition module configured to acquire a prompt sent by a server for the recognition result and/or the data currently collected by the autonomous vehicle in a case that no driving scenario matched with the recognition result is determined for the autonomous vehicle, so as to warn the pedestrian(s) or vehicle(s) around the autonomous vehicle to make avoidance.

In some embodiment, the first acquisition module includes: a third acquisition unit configured to acquire data currently collected by the autonomous vehicle, where the data currently collected by the autonomous vehicle includes at least one of the image data and the radar data; an uploading unit configured to upload the data currently collected by the autonomous vehicle to the server; and a fourth acquisition unit configured to acquire a prompt sent by the server for the data currently collected by the autonomous vehicle, so as to warn a pedestrian around the autonomous vehicle or a vehicle around the autonomous vehicle to make avoidance.

In some embodiment, the apparatus further includes: an uploading module configured to transmit data of the autonomous vehicle to the server, where the data of the autonomous vehicle includes at least one of: the data currently collected by the autonomous vehicle; the recognition result; information of the driving scenario for the autonomous vehicle matching the recognition result; and a prompt associated with the information of the driving scenario for the autonomous vehicle.

In some embodiment, the apparatus further includes: a third acquisition module configured to acquire updated data sent by the server; and an updating module configured to update, by using the updated data, at least one of: information of the driving scenario for the autonomous vehicle stored locally by the autonomous vehicle, a prompt associated with the information of the driving scenario for the autonomous vehicle stored locally by the autonomous vehicle, and a relationship between the information of the driving scenario for the autonomous vehicle stored locally by the autonomous vehicle and the prompt associated with the information of the driving scenario for the autonomous vehicle stored locally by the autonomous vehicle.

It should be understood that embodiments of the apparatus part and the method part of the present disclosure are corresponding to each other in a same or similar manner, so are the technical problems they solved and the technical effects they achieved, and details will not be repeated here again.

According to an embodiment of the present disclosure, an autonomous vehicle is further provided in the present disclosure.

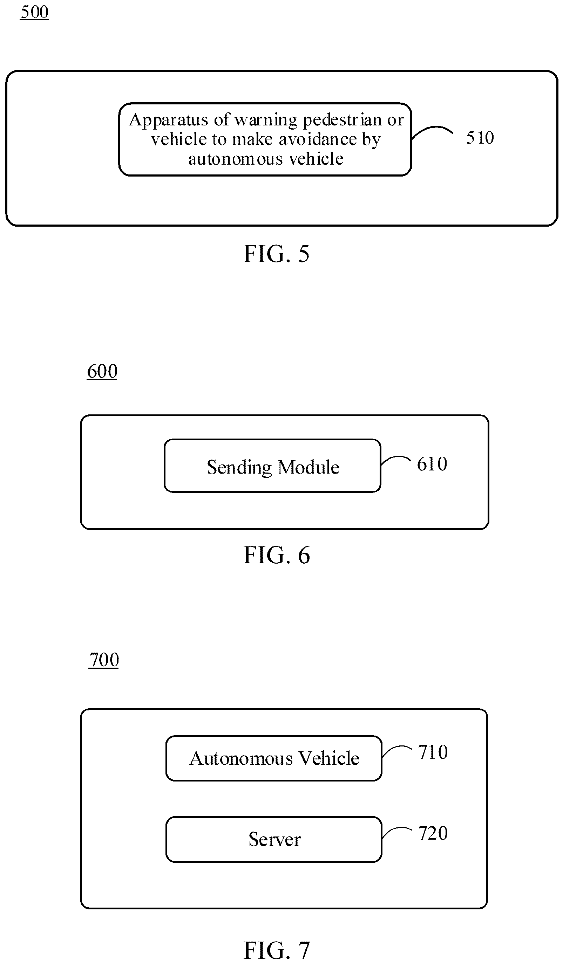

FIG. 5 exemplarily shows a block diagram of an autonomous vehicle according to an embodiment of the present disclosure.

As shown in FIG. 5, the autonomous vehicle 500 may include an apparatus 510 of warning a pedestrian or a vehicle to make avoidance by an autonomous vehicle.

It should be noted that, regarding the apparatus 510 of warning a pedestrian or a vehicle to make avoidance by an autonomous vehicle in the embodiment of the present disclosure, reference may be made to relevant descriptions in the foregoing embodiments, and details will not be repeated here again.

According to an embodiment of the present disclosure, a server is further provided in the present disclosure.

FIG. 6 exemplarily shows a block diagram of a server according to an embodiment of the present disclosure.

As shown in FIG. 6, the server 600 may include a sending module 610.

The sending module 610 is configured to send, to an autonomous vehicle, a prompt for warning a pedestrian or a vehicle to make avoidance, so that the autonomous vehicle acquires the prompt and displays the prompt on a display unit of the autonomous vehicle, where the display unit includes at least one of a windshield, a window glass, a projection screen mounted on the windshield, and a projection screen mounted on the window glass.

It should be noted that, regarding the autonomous vehicle in the embodiment of the present disclosure, reference may be made to relevant descriptions in the foregoing embodiments, and details will not be repeated here again. In addition, the server in the embodiment may be a cloud server. Regarding the method of acquiring the prompt and delivering the prompt to the autonomous vehicle by the server, reference may be made to relevant descriptions in the foregoing embodiments, and details will not be repeated here again.

According to an embodiment of the present disclosure, a warning system for an autonomous vehicle is further provided in the present disclosure.

FIG. 7 exemplarily shows a block diagram of a warning system for an autonomous vehicle according to an embodiment of the present disclosure.

As shown in FIG. 7, the warning system 700 for an autonomous vehicle may include an autonomous vehicle 710 and a server 720.

It should be noted that, regarding the autonomous vehicle in the embodiment of the present disclosure, reference may be made to relevant descriptions in the foregoing embodiments, and details will not be repeated here again. In addition, regarding the server in the embodiment of the present disclosure, reference may be made to relevant descriptions in the foregoing embodiments, and details will not be repeated here again.

According to an embodiment of the present disclosure, an electronic device, a readable storage medium, and a computer program product are further provided in the present disclosure.

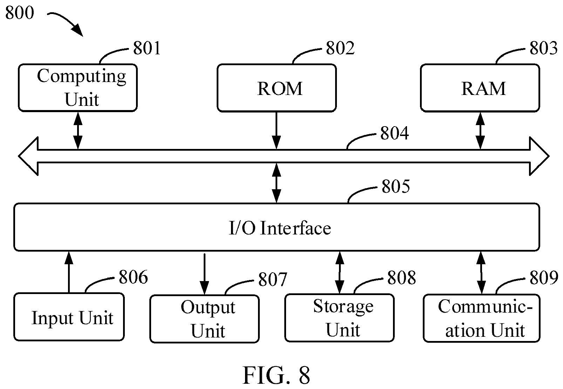

FIG. 8 shows a schematic block diagram of an exemplary electronic device 800 that may be used to implement the embodiments of the present disclosure. The electronic device is intended to represent various forms of digital computers, such as laptops, desktops, workstations, personal digital assistants, servers, blade servers, mainframe computers, and other suitable computers. The Electronic device may also represent various forms of mobile devices, such as personal digital processors, cellular phones, smart phones, wearable devices, and other similar computing devices. For example, the electronic device 800 may be included in the autonomous vehicle according to the embodiments of the disclosure. The components, the connections and relationships thereof, and the functions thereof shown herein are by way of example only, and are not intended to limit implementations of the present disclosure described and/or claimed herein.

As shown in FIG. 8, the electronic device 800 includes a computing unit 801, which may perform various appropriate actions and processes according to a computer program stored in a read only memory (ROM) 802 or a computer program loaded into a random access memory (RAM) 803 from a storage unit 808. In the RAM 803, various programs and data necessary for the operation of the electronic device 800 may further be stored. The computing unit 801, the ROM 802, and the RAM 803 are connected to each other through a bus 804. An input/output (I/O) interface 805 is further connected to the bus 804.

A plurality of components in the electronic device 800 are connected to the I/O interface 805, including: an input unit 806, such as a keyboard, a mouse, etc.; an output unit 807, such as various types of displays, speakers, etc.; a storage unit 808, such as a magnetic disk, an optical disk, etc.; and a communication unit 809, such as a network card, a modem, a wireless communication transceiver, etc. The communication unit 809 allows the device 800 to exchange information/data with other devices through a computer network such as the Internet and/or various telecommunication networks.

The computing unit 801 may be various general-purpose and/or special-purpose processing components with processing and computing capabilities. Some examples of computing units 801 include, but are not limited to, central processing units (CPUs), graphics processing units (GPUs), various specialized artificial intelligence (AI) computing chips, various computing units that run machine learning model algorithms, digital signal processing processor (DSP), and any suitable processor, controller, microcontroller, etc. The computing unit 801 performs the methods and processes described above, such as the method of warning a pedestrian or a vehicle to make avoidance by an autonomous vehicle. For example, in some embodiments, the method of warning a pedestrian or a vehicle to make avoidance by an autonomous vehicle may be implemented as a computer software program tangibly embodied on a machine-readable medium, such as the storage unit 808. In some embodiments, part or all of the computer program may be loaded and/or installed on the device 800 via the ROM 802 and/or the communication unit 809. When the computer program is loaded into the RAM 803 and executed by the computing unit 801, one or more steps of the above-described method of warning a pedestrian or a vehicle to make avoidance by an autonomous vehicle may be performed. Alternatively, in other embodiments, the computing unit 801 may be configured to perform the method of warning a pedestrian or a vehicle to make avoidance by an autonomous vehicle by any other suitable means (e.g., by means of firmware).

Herein, various implementations of the systems and techniques described above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, firmware, software, and/or combinations thereof. These various implementations may include being implemented in one or more computer programs, where the one or more computer programs may be executed and/or interpreted on a programmable system including at least one programmable processor. The programmable processor, which may be a special purpose or general purpose programmable processor, receives data and instructions from a storage system, at least one input device, and at least one output device, and transmits the data and the instructions to the storage system, the at least one input device, and the at least one output device.

Program codes for implementing the method of the present disclosure may be written in any combination of one or more programming languages. These program codes may be provided to a processor or a controller of a general purpose computer, a special purpose computer or other programmable data processing apparatus, such that the program codes, when executed by the processor or the controller, causes the functions/operations specified in the flowcharts and/or the block diagrams to be performed. The program codes may be executed entirely on the machine, partly on the machine, partly on the machine and partly on a remote machine as a stand-alone software package or entirely on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable media may include, but are not limited to, electronic, magnetic, optical, electromagnetic, infrared, or semiconductor systems, devices, or devices, or any suitable combination of the foregoing. More specific examples of the machine-readable storage media may include electrical connections based on one or more wires, portable computer disks, hard disks, random access memories (RAMs), read only memories (ROMs), erasable programmable read only memories (EPROMs or flash memories), optical fibers, portable compact disk read only memories (CD-ROMs), optical storage devices, magnetic storage devices, or any suitable combination of the foregoing.

In order to provide interaction with a user, the systems and techniques described herein may be implemented on a computer having a display device (e.g., a CRT (cathode ray tube) or a LCD (liquid crystal display) monitor) for displaying information to the user; and a keyboard and a pointing device (e.g., a mouse or a trackball) through which the user may provide input to the computer. Other kinds of devices may also be used to provide interaction with the user; for example, the feedback provided to the user may be sensory feedback in any form (e.g., the visual feedback, the auditory feedback, or the tactile feedback), and the input from the user may be received in any form (including the acoustic input, the voice input, or the tactile input).

The systems and techniques described herein may be implemented on a computing system that includes back-end components (e.g., as a data server), or a computing system that includes middleware components (e.g., an application server), or a computing system that includes front-end components (e.g., a user's computer having a graphical user interface or a web browser through which the user may interact with the implementations of the systems and techniques described herein), or a computing system that includes any combination of such back-end components, middleware components, or front-end components. The components of the system may be interconnected by any form or medium of digital data communication (e.g., a communication network). Examples of the communication network include: Local Area Networks (LANs), Wide Area Networks (WANs), and the Internet.

A computer system may include a client and a server. Clients and servers are generally remote from each other and usually interact through a communication network. The relationship of the client and the server arises by computer programs running on respective computers and having a client-server relationship to each other. The server may be a cloud server, also known as a cloud computing server or a cloud host. It is a host product in the cloud computing service system, to solve the traditional physical host and VPS service ("Virtual Private Server", or "VPS" for short), the existing problems of difficult management and weak business scalability. The server may also be a server of a distributed system, or a server combined with a blockchain.

Collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user.

It should be understood that steps of the processes illustrated above may be reordered, added or deleted in various manners. For example, the steps described in the present disclosure may be performed in parallel, performed sequentially, or performed in a different order, as long as a desired result of the technical solution of the present disclosure may be achieved, which is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of warning a pedestrian or a vehicle to make avoidance by an autonomous vehicle, comprising:
acquiring (S210) a prompt for warning a pedestrian or a vehicle to make avoidance; and
displaying (S220) the prompt on a display unit of the autonomous vehicle, wherein the display unit comprises at least one of a windshield, a window glass, a projection screen mounted on the windshield, and a projection screen mounted on the window glass.

2. The method of claim 1, wherein the windshield comprises at least one of a front windshield and a rear windshield.

3. The method of claim 1 or 2, wherein the displaying the prompt on a display unit of the autonomous vehicle comprises at least one of: based on a driving intention of the autonomous vehicle expressed by the prompt,
displaying the prompt at a specified position of the display unit of the autonomous vehicle;
displaying the prompt with a specified text attribute on the display unit of the autonomous vehicle; and
displaying, by the autonomous vehicle, the prompt on the display unit within a specified period of time.

4. The method of claim 1, wherein the acquiring a prompt for warning a pedestrian or a vehicle to make avoidance comprises:
acquiring data currently collected by the autonomous vehicle, wherein the data currently collected by the autonomous vehicle comprises at least one of image data and radar data;
recognizing the data currently collected by the autonomous vehicle to obtain a corresponding recognition result;
determining for the autonomous vehicle a driving scenario matched with the recognition result; and
acquiring a prompt associated with the driving scenario for the autonomous vehicle so as to warn a pedestrian around the autonomous vehicle or a vehicle around the autonomous vehicle to make avoidance.

5. The method of claim 4, further comprising:
in a case that no driving scenario matched with the recognition result is determined for the autonomous vehicle, acquiring a prompt sent by a server for the recognition result and/or the data currently collected by the autonomous vehicle, so as to warn the pedestrian around the autonomous vehicle or the vehicle around the autonomous vehicle to make avoidance.

6. The method of claim 1, wherein the acquiring a prompt for warning a pedestrian or a vehicle to make avoidance comprises:
acquiring data currently collected by the autonomous vehicle, wherein the data currently collected by the autonomous vehicle comprises at least one of image data and radar data;
uploading the data currently collected by the autonomous vehicle to a server; and
acquiring a prompt sent by the server for the data currently collected by the autonomous vehicle, so as to warn a pedestrian around the autonomous vehicle or a vehicle around the autonomous vehicle to make avoidance.

7. The method of claim 4, further comprising:
transmitting data of the autonomous vehicle to a server, wherein the data of the autonomous vehicle comprises at least one of:
the data currently collected by the autonomous vehicle;
the recognition result;
information of the driving scenario for the autonomous vehicle matched with the recognition result; and
a prompt associated with the information of the driving scenario for the autonomous vehicle.

8. The method of claim 1, further comprising:
acquiring updated data sent by a server; and
updating, by using the updated data, at least one of: information of the driving scenario for the autonomous vehicle stored locally by the autonomous vehicle, a prompt associated with the information of the driving scenario for the autonomous vehicle stored locally by the autonomous vehicle, and a relationship between the information of the driving scenario for the autonomous vehicle stored locally by the autonomous vehicle and the prompt associated with the information of the driving scenario for the autonomous vehicle stored locally by the autonomous vehicle.

9. An apparatus (400) of warning a pedestrian or a vehicle to make avoidance by an autonomous vehicle, comprising:
a first acquisition module (410) configured to acquire a prompt for warning a pedestrian or a vehicle to make avoidance; and
a display module (420) configured to display the prompt on a display unit of the autonomous vehicle, wherein the display unit comprises at least one of a windshield, a window glass, a projection screen mounted on the windshield, and a projection screen mounted on the window glass.

10. A server (600), comprising:
a sending module (610) configured to send to an autonomous vehicle a prompt for warning a pedestrian or a vehicle to make avoidance, such that the autonomous vehicle acquires the prompt and displays the prompt on a display unit of the autonomous vehicle, wherein the display unit comprises at least one of a windshield, a window glass, a projection screen mounted on the windshield, and a projection screen mounted on the window glass.

11. An electronic device (800), comprising:
at least one processor (801); and
a memory (808) communicatively connected to the at least one processor (801), wherein
the memory (808) stores instructions executable by the at least one processor (801), and the instructions, when executed by the at least one processor (801), cause the at least one processor (801) to implement the method of any of claims 1 to 8.

12. An autonomous vehicle, comprising the electronic device of claim 11.

13. A warning system (700) for an autonomous vehicle, comprising:
the autonomous vehicle (710) of claim 12; and
a server (720) configured to send to an autonomous vehicle a prompt for warning a pedestrian or a vehicle to make avoidance, such that the autonomous vehicle acquires the prompt and displays the prompt on a display unit of the autonomous vehicle, wherein the display unit comprises at least one of a windshield, a window glass, a projection screen mounted on the windshield, and a projection screen mounted on the window glass.

14. A non-transitory computer-readable storage medium having computer instructions stored thereon, wherein the computer instructions allow a computer to implement the method of any of claims 1 to 8.

15. A computer program product comprising a computer program, which when executed by a processor, implements the method of any of claims 1 to 8.
